# EUROPEAN PATENT APPLICATION

(11) **EP 4 036 678 A1**
(43) Date of publication of application: **03.08.2022**
(21) Application number: 21154209.7
(22) Date of filing: 29.01.2021
(51) Int. Cl.: G05B 23/02

(54) **ANOMALY DETECTION DURING OPERATION OF A CONVEYING SYSTEM**

(71) Applicant: Siemens Aktiengesellschaft, 80333 München (DE)
(72) Inventor: VAZQUEZ RAMO, Ramon, 1400-203 Lisboa (PT); REICHELT, Christoph, London, W5 4XP (GB); KÖNIG, Frank, 78333 Stockach (DE); GUPTA, Vishal Kumar, 33734 Dubai (AE)
(74) Representative: Siemens Patent Attorneys

(57) **Abstract**

Preventative maintenance of conveying systems 2 is desirable but labor intensive with the existing methods that are only applicable to small systems 2. Disclosed is a method for anomaly detection during operation of a conveying system 2 formed of at least one carrier 4s, comprising a sensor unit 26, running on a conveyer track 6. The sensor unit registers measurements of the conveying system 2 while the carrier 4s runs on the conveyer track 6. The position of the carrier 4s is continuously determined. The conveyer track 6 is divided into sections. The measured data are allocated to a specific section based on the position determination and are then subjected to an analysis for each section separately. Deviations in the analyzed data are detected as an anomaly and signaled by a message indicating the position.

## Description

The present invention relates to a method for anomaly detection during operation of a conveying system and to a conveying system with anomaly detection according to the independent claims.

In particular, the present invention relates to the technical field of sorter conveying systems. The invention is applicable to a wide variety of conveying systems, showcased in the following are airport and postal applications.

Every conveyer system operator aims to reduce failures to a minimum. In practice, this means that the conveying systems are kept "live" during operation and the time-based maintenance is performed outside of operating times. Control and operating computer systems monitor and control technical processes and can indicate failures of portions of a conveying system, e.g. when these portions are no longer available. Smaller problems, such as interruptions to the flow of materials, e.g. caused by wedged items, can be rectified in a very rapid manner, meaning that the portion in question can return to the normal operating state. Component failures which are caused by wear or ill installation, however, mostly cannot be rectified without significant impacts on the availability and capacity of the system. These failures may lead to major problems for the operator.

To date, this problem has been solved by what is known as "preventive maintenance" entailing the elaborate preventive maintenance of components at predetermined maintenance intervals on a regular schedule with the target to find problems or identify upcoming issues that could lead to system downtime. Maintenance activities take place on individual components which would not yet even actually be necessary. In addition, the deterioration of individual, identical components is not uniform, meaning that some components are maintained too frequently, while other components are maintained too late, and that failures nonetheless arise despite regular maintenance intervals. For this reason, time-based or preventive maintenance programs are increasingly being replaced by a program for corrective maintenance, known as Run-to-Failure (RTF) or reactive maintenance. This reactive maintenance leads to failed components, which have to be repaired or replaced during ongoing operation, which may lead to system downtimes and to contractual penalties for items which have been delivered late. In addition, high costs arise for the repair or the replacement due to sudden breakdown, not least because the maintenance personnel have to be available for immediate deployment, similar to a fire department.

Sorters such as tilt tray and cross belt sorters are highspeed, continuous-loop sortation conveyers that use a technique of tilting a tray of a carrier to slide/drive a belt (arranged transverse to the conveyer track) of a carrier to unload an object into an unloading station. Those sorters are designed for bi-dimensional unloading allowing the dispatching of items to both sides of the sorter. With continuous-loop sortation conveyer design, all carriers are linked using a chain principal. The chains are driven by electrical linear motors. Tilt tray and cross belt sorters consist of individual trays travelling in the same direction and can be configured custom-build in various shapes (curved, straight, inclined and declined sections,...) based on building restrictions, e.g. the conveyer track can be build around a column if necessary, up and down levels ....

The problems with preventive maintenance described above are especially pronounced for tilt tray and cross belt sorters, because virtually all wear and tear parts are hidden, thus can only be inspected during non-operational times involving laborious and time-consuming dismantling work. If wear occurs unnoticed, the impact is fatal (long periods of downtime and the related financial loss). Both sorter systems are typically very long, several kilometers in lengths and a high number of parts needs to be inspected for a preventive maintenance. For this reason, due to cost-effectiveness considerations, they are often not even maintained, but operated until a failure occurs during ongoing operation. Knowing the exact location of occurring and imminent failures would be of tremendous help, greatly reducing maintenance labor and cost.

Problems with conveyers may occur during operation of a conveyer or may already be present at initial operation and worsen over time. To name a few: abrasive and adhesive wear due to objects on the track or the influence of debris and humidity, power rail misalignment, a sorter chain being too tight or too loose (both causing increased wear), wrongly adjusted air gaps between linear motor and stator. All of these problems worsen and increase wear and tear of components the longer they are present in a running conveyer.

For this reason, it is important to precisely detect imminent failures, in the following referred to as anomalies, as early as possible, in order for an operating failure to still be able to be prevented and for the repair to be able to be performed immediately once an out-of-service period begins. Such a maintenance solution suitable for such large conveyers is not yet available on the market.

Existing methods of automatically detecting the state of wear based on vibration and temperature monitoring exist, but they are only applicable to small conveying systems. EP1469278A1 describes an apparatus and method of automatically capturing the state of wear of mobile wheels or rollers in conveying-technology installations in a simple and secure manner in terms of measuring technology when a roller to be examined passes through a stationary measuring station arranged in the conveying path. The states of wear of rails is not detected.

WO2019242999 discloses a method for wear detection of transport rollers during the operation of a conveying system that is however only applicable to much smaller conveying systems. In the small set-ups, a position determination can be achieved with sufficient precision with simple-run-time-measurements where a zero time is set for a sensor at a fixed location and the traveling speed of the sensor is known

EP20193378 (disclosing a method for measuring chain tension of a conveying system) is incorporated by reference into this application.

These approaches still require a visual inspection to tie the observed reading back to a known operational issue or state and especially to the exact position of occurrence. The fall back to regular visual inspections strongly depend on technicians' judgements, skill and training. Therefore, inspection based maintenance management inevitably moves towards a 'run to failure' state as preventative maintenance and regular inspections are deferred as resources are stretched trying to firefight failures.

Even with modern data analytics methods such as Fast Furrier Transformation (FFT) and machine learning (ML) technology, extensive open and close loop conveyers have - partly due to their length - a complexity that require other technology to analyze anomalies and identify the location where they occur.

The object underlying the present invention is therefore to specify a method for anomaly detection during operation of a conveying system, which detects an anomaly with an indication of the occurring position with little equipment outlay, therefore permitting an anomaly detection to take place as far in advance of a system failure as possible. Likewise, a conveying system is to be specified, in which the aforementioned anomaly detection is realized. This object is achieved by the measures specified in the independent claims.

The solution according to the invention is characterized by a method for anomaly detection during operation of a conveying system, especially a sorter, which is formed of at least one carrier running on a conveyer track, especially a conveyer loop, wherein the carrier comprises a sensor unit comprising one or more sensors. Each sensor registers measurements useable for an anomaly detection of the conveying system while the carrier runs on the conveyer track. The position of the carrier is continuously determined. Dividing the conveyer track into sections. The measured data are allocated to a specific section based on determined position of the carrier and are then subjected to an analysis for each section separately before and/or after a transmission to a background system. The data are transmitted wirelessly by the sensor unit to the background system, together with a time stamp and an identity of each sensor. Deviations in the analyzed data transmitted in the method step e) are detected as an anomaly and signaled by a message by the background system indicating the position with a minimum precision of the section of the anomaly. The order of these method steps is permutable.

The solution according to the invention is further related to a conveying system, especially a sorter, which is formed of at least one carrier running on a conveyer track, especially a conveyer loop, wherein the carrier comprises a sensor unit comprising one or more sensors, the conveying system comprising means for performing the method as claimed in one of the method claims.

Thus, the following advantages may additionally be produced:
i) Anomalies can be detected before a system failure or excessive wear occurs, and targeted maintenance work can be started in a timely manner. Undirected preventative maintenance of the whole conveying system becomes obsolete.
ii) The solution according to the invention is particularly useful for conveying systems in which conveyer tracks are concealed and can only be inspected (and repaired) by opening covers. Location and type of the detected anomaly is known.
iii) The solution according to the invention is particularly useful for large conveying systems and those with junctions and several conveyer tracks, where the carrier runs different paths. In these cases, tracking the position of the detected anomaly with sufficient accuracy with a simple run-time determination is not enough or not even possible.
iv) Dividing the conveyer track into sections leads to every section and their most common imminent failures being slightly different. It can be a simple section just with a straight profile. It can be a section with a linear motor, with a divert, an uprighting station or other equipment that generates its own vibration pattern. The sequencing of a complex machinery in sections and applying an analysis to the measured data (such as FFT, ML and/or other analytic methods), tendencies and deviations in data values can be detected and analyzed as an early indicator for an upcoming failure. Small deviations of a specific section that - if not tied to this specific sections - are simply vacuous, are indication of an anomaly if they reoccur in the section wise analysis.

The invention refers especially to sorters such as tilt tray, cross belt, sliding shoe etc. with the focus on maintenance prevention and monitoring solution that enable operation and maintenance to locate an anomaly, indicating an upcoming failure precisely, presenting failure tendencies that manifest in anomalies with the target to enable operation and maintenance to be aware of an upcoming failure in a very early stage, e.g. before an actual break-down. Some imminent failures are easy to repair at initial stage, but if they are left unrepaired, increase wear and tear enormously leading to greater damage and higher repair costs. Incurred failures are also detected as anomalies.

The term conveyer track (conveyer line, driving surface, trackway, conveyer belt, ...) comprises every path which a carrier (comprising a drive unit or passively transported by the conveyer track) can run. The time stamp comprises at least a relative time in relation to a zero time. A continuous position determination means continuous enough so that every position determination can be mapped to the other measurements, meaning that the sampling rate of the position determination is preferably equal or greater the sampling rate of the other measurements. The sensors and/or devices yielding the position also comprise a time stamp, so the time stamp of the other sensors can be mapped to the time stamps from the position determination.

The measured data of each sensor that are transmitted by the sensor unit to the background system are raw data, pre-analyzed or completely analyzed by the sensor unit. If the position determination and dividing into sections is already done in the sensor unit, an identity of the section is also transmitted together with the other data and the time stamp and identity of each sensor.

Further advantageous embodiments of the invention are specified in the dependent claims.

In a preferred embodiment, the position determination comprises the orientation of the carrier and based on the determined position of the carrier, an image of the conveyer system shape is automatically created.

In a preferred embodiment, the conveying system can further comprise one or more additional sensors and/or reference devices localized stationary and/or on moving parts of the conveying system, wherein each additional sensor registers further measurements useable for an anomaly detection of the conveying system and transmits the measured data wirelessly to the sensor unit, wherein a position of each additional sensor and/or reference device is precisely known or determinable. The position relative to the sensor unit of a moving additional sensor is known.

In a preferred embodiment, the position of the carrier can be determined also using the reference device and/or one or more of the sensors can comprise one or more of the following: An orientation sensor such as a gyroscope, especially a gyrometer; a movement and/or acceleration sensor such as a speedometer; a pulse encoder. Reference devices may also serve as parts of a triangulation unit. One or several of the reference devices installed close to or on the conveyer track at a reference point and a reference sensor interacting with the reference device comprised by the sensor unit. A temperature sensor can for instance serve as a reference sensor. A stationary sensor localized and adapted to determine speed and/or position of the carrier. With the movement sensor, the position of the carrier can be determined based on the carrier's distance traveled since passing the reference point, wherein the position of the reference point is known. Combination with the orientation measurements enable the background system to recognize bends and straight areas and allow building the conveyer shape. By way of a permanent or cyclical communication between a moving sensor of the carrier and the reference device, a zero time can be defined on each pass as a result. This reference device therefore has a function of a beacon / position reference device. If the conveyer system is equipped with a high enough number of position reference devices (such as one reference device per section, involving a lot of installation effort), they could also be used as the most prominent method of position determination.

In a preferred embodiment, the sections can be determined by one or more of the following method steps. One or several, especially even multiple, pulse counts (e.g. of the pulse encoder) determine start and end of a section. The conveyer track is divided in sections of equal length. The conveyer track is divided into sections with distinct profile and/or functionality. The reference device installed at the reference point determines start and/or end of a section. Choosing the sections such that they have a distinct profile could e.g. result in straight, inclined and curved sections (or a combination thereof) results in sections of different lengths that could also be subdivided in smaller sections.

In a preferred embodiment, the position of the carrier may also be determined using the one or more reference devices, wherein the determination of the sections can take into account input stemming from the position determination of the carrier.

In a preferred embodiment, for each section, an analysis method and/or if all or only some of the measured data are subjected to the analysis can be determined individually. This is useful for a variety of reasons such as e.g. in the case of detecting connection misalignments. Sorters are often built with prefabricated, on-site connected segments. It does not make much sense to analyze the measurements of one section that lies entirely on one segment for a connection misalignment. Certain types of wear occur more on sections of a certain profile.

In a preferred embodiment, when several anomalies are detected, the detected anomalies can be classified in a list of detected anomalies in function of a determined anomaly characteristic, wherein said list establishes a ranking among all detected anomalies, said ranking representing an order of inspection according to which the detected anomalies have to be inspected, the classification of the detected anomalies in said list being configured for defining said order of inspection for the detected anomalies. Said list can be updated at each new anomaly that is detected such that each newly detected anomaly is thus classified in said list comprising previously detected anomalies. Said list and any update of said list might be transmitted in real time to be displayed to the maintenance team indicating to them the first anomaly to be inspected and the following subsequent elements of the list represent the next anomalies to be inspected in the order in which they have to be inspected. Preferably, the background system is able to classify the anomalies to be inspected according to an order that optimizes the efficiency of the inspections of said anomalies by the maintenance team, improving the efficiency of the inspections while taking into account the urgency of inspection. For every detected anomaly, one, several or all of the characteristics of the list can be displayed in a created conveyer system shape in graphical and/or written form.

Preferably, the background system can display the image of the conveyer shape, possibly indicating the sections, wherein the detected anomaly may be displayed at its position of occurrence with the message and/or a graphical and/or numerical representation of the measurements, wherein the detected anomalies and the conveyer system shape are displayed in the form of an adaptable dashboard wherein the displayed characteristics and how they are displayed can be chosen by an operator.

The sections can be visually separated with simple borderlines and/or a color visualization. Preferably, the background system can be integrated into an existing operating system, e.g. a SCADA-system, enabling retrofitting of the method into existing systems with little additional computer related costs - in this case, just a software update and the carrier comprising the sensor unit needs to be provided. The type of display can be freely chosen according to preference. A color coding with different color shades representing the size of the deviation, the type of measurement can be chosen. It is possible to indicate numerical values (absolute or normalized against a reference value) in the display. The deviation can be plotted in the displayed image at its position of occurrence. A service technician looking at the image of the conveyer system shape and the analyzed data can then in an instant localize the reason for the anomaly in the real conveying system.

In a preferred embodiment, the deviations can be detected by a statistical comparison with preceding registrations of the same section or by a comparison with a fixed magnitude. This leads to a self-consistent analysis without the need for external references or enables a detection of anomalies already at the first pass of the section.

In a preferred embodiment, the transmission of the data from the sensor unit to the background system can take place via a gateway, wherein the gateway can be installed at a fixed location on to the conveyer track and, each time the carrier passes over it, a zero time is set such that the gateway serves as a reference device and in addition to the measurements, state data of at least one sensor - such as e.g. a remaining battery capacity and temperature - is transmitted. This recalibrates the position, improving accuracy of the position determination even further while simultaneously transmitting data. A monitoring of the sensors themselves is also ensured, and the maintenance expenses are considerably reduced once more as a result. When a specified state data is fallen below a certain threshold or a particular temperature is exceeded, this can be treated as an anomaly and a message as in the case of a detected anomaly can likewise be issued.

In a preferred embodiment, the analyzed data can be combined to determine deviations to detect an anomaly and/or a characteristic of the detected anomaly. The sensors can be adapted to determine one or more of the following: oscillation, vibration, chain tension, temperature, carrier condition, track surface condition, power rail condition. The chain tension can be measured with a force measuring load pin (see EP20193378). Further determinations and sensors can be chosen according to the specific conveying system and the occurring types of wear and errors that need surveillance. The data can be combined to determine deviations to detect an anomaly and/or a characteristic of the detected anomaly.

In a preferred embodiment, the conveying system can further comprise one or more additional sensors and/or reference devices localized stationary and/or on moving parts of the conveying system. Each sensor can register measurements useable for an anomaly detection of the conveying system while the carrier runs on the conveyer track. The sensors can register measurements to determine one or more of the following: oscillation, vibration, chain tension, carrier condition, track surface condition, power rail condition. The position of the carrier is continuously determined. The conveying system is configured for dividing the conveyer track into sections. The measured data are allocated to a specific section based on the determined position of the carrier and are then subjected to an analysis for each section separately before and/or after a transmission to a background system. The data can be transmitted wirelessly by the sensor unit to the background system, together with a time stamp and an identity of each sensor. The background system can be configured to automatically create an image of the conveying system shape based on the determined position of the carrier, wherein the term position comprises orientation. Deviations in the analyzed data previously transmitted can be detected as an anomaly and signaled by a message by the background system indicating the position with a minimum precision of the section of the anomaly. The background system can display the detected anomaly at its position of occurrence in the created conveyer system shape with the message and/or a graphical and/or numerical representation of the measurements. The background system can preferably be configured to display the detected anomalies and the conveyer system shape in the form of an adaptable dashboard wherein the displayed characteristics and how they are displayed can be chosen by an operator.

The invention is explained in greater detail below on the basis of the drawing for example, in which:
- Figure 1: shows a view on a tilt tray conveying system;
- Figure 2: shows wear points on a rail;
- Figure 3: shows a sensor unit attached to a carrier in a view from below the carrier;
- Figure 4: shows a plot indicating detected anomalies at their location of occurrence.

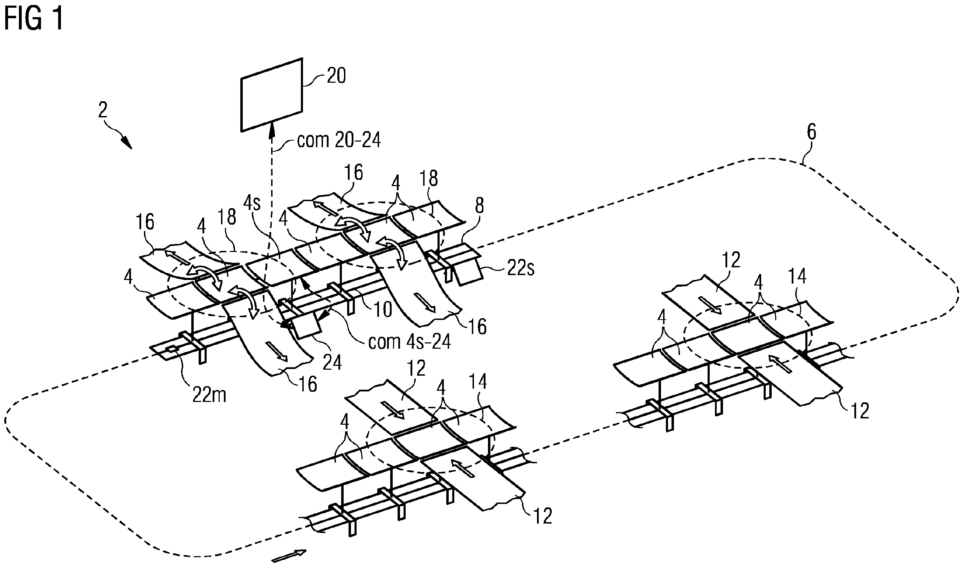

The exemplary embodiment described in FIG 1 below relates to a tilt tray sorter 2 to which the invention is not restricted, but rather can be applied to any sorter and any kind of conveying system 2 which comprises at least one carrier 4s with a sensor unit (comprising one or more sensors 27) running on a conveyer track 6. Cross belt sorters 2 differ from tilt tray sorters 2 only in the carrying element (tilting tray vs. belt). The invention is of special interest in the field of airport and postal conveying systems. The conveyer system 2 may comprise junctions and several conveyer tracks 6, such that the carrier 4s can run different paths 6.

The frequency with which different paths 6 are investigated with the carrier 4s can be adjusted, frequent investigations useful e.g. at high traffic frequency or expected damage in case of breakdown (bottleneck of the conveying system 2 e.g.) .

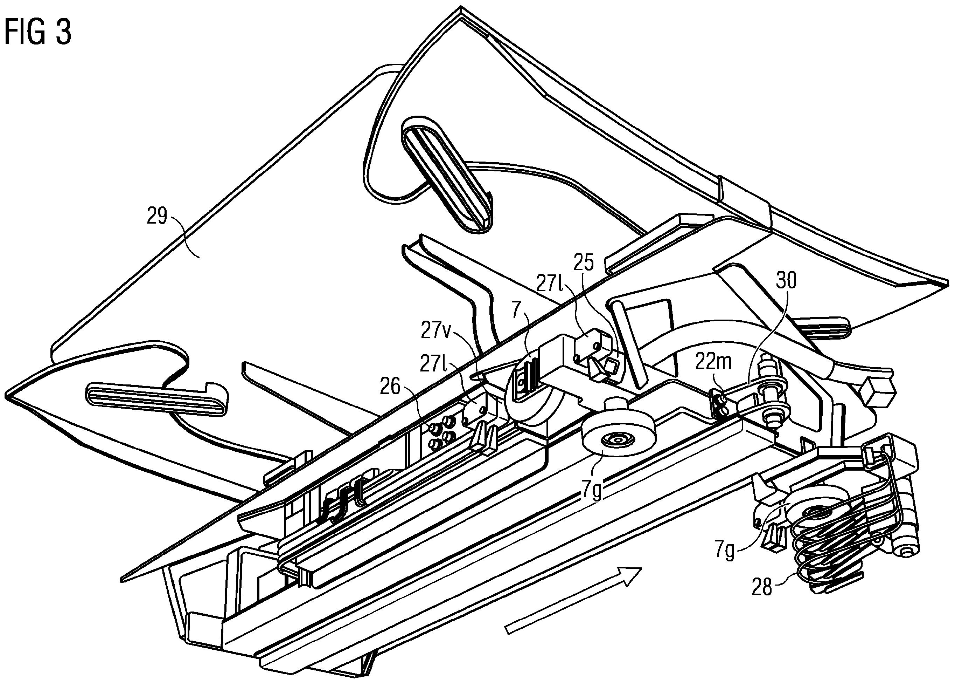

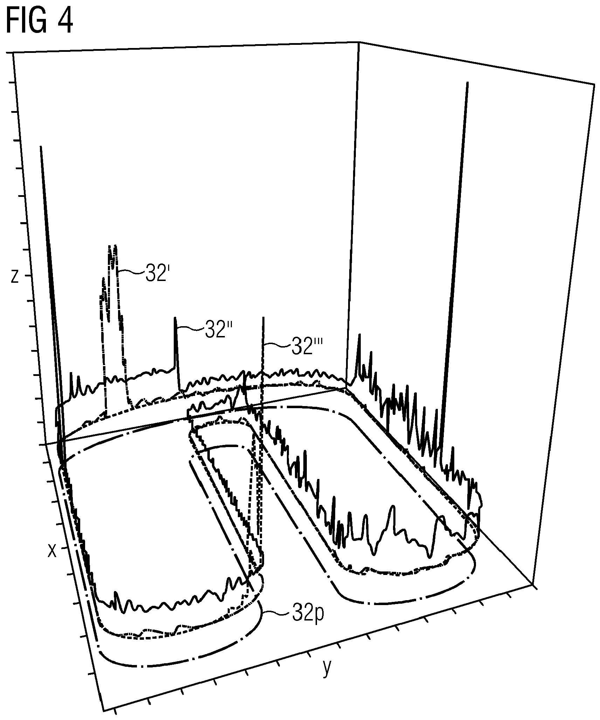

Conveying systems 2 such as sorters 2 vary in length, are custom designed so that they fit in the building space foreseen for the sortation facility. The conveying system 2 of FIG 1 has an oval shape (in contrast to FIG 4 with two bends, kind of a U-shape) and comprises a rail 8 and a line of carriers 4, 4s (loaded at feeding stations 14 by feeding conveyers 12 and discharged at unloading stations 18 onto chutes 16) mounted for travel along the rail 8 along the conveyer track 6 (open or closed loop). The carriers 4,4s are linked to a chain 10 which is driven by a motor. While (unloaded or loaded with piece goods) the carrier 4s with the sensor unit 26 runs on the conveyer track 6, its sensors 27 register measurements useable for an anomaly detection. The sensor unit 26 and all its sensors 27 are small compared to the carrier 4s, do not disturb the normal process and hence can easily be attached to any normal carrier 4 with a fixation 25 such as a metal clamp or any other kind (FIG 3).

According to an embodiment of the invention, the position of the carrier 4s, is continuously determined while running on the conveyer track 6. The conveyer track 6 is divided into sections and the measured data are back-traced to their position and section of occurrence based on the position determination with extremely high precision and are then subjected to an analysis for each section separately before and/or after a transmission to a background system 20. The data (raw and/or pre-analyzed and/or completely analyzed) are transmitted wirelessly by the sensor unit 26 to the background system 20, together with a time stamp and an identity of each sensor 27, 22s, 22m. The sensor unit 26 transmits the data to a gateway 24 each time the carrier 4s passes over it (step com4s-24) from where it is transmitted to the background system 20 (step com24-20), reducing data transmission and simultaneously yielding a zero time - the gateway 24 serving double duty as a reference device 24. The transmission can also be done continuously directly from the sensor unit 26 to the background system 20.

The data analysis of the background system 20 recognizes deviations. The deviations are detected by a statistical comparison with preceding registrations of the same section or by a comparison with a fixed magnitude / standard value. Deviations imply anomalies and are signaled by a message by the background system 20 indicating its position of occurrence with a minimum precision of the section of the anomaly. A detected anomaly, that is located precisely, indicates an upcoming failure early such that maintenance can be planned before a break-down and/or excessive wear occurs without the need to search for the position of occurrence. As the type of most imminent failures is revealed by the measured data and also certain kind of anomalies are more prevalent in sections of certain profiles, the urgency and time needed for a repair is often known even before a visual inspection.

According to an embodiment, the position determination of the carrier 4s comprises an orientation determination. The orientation is measured with one or several orientation sensors 27. Especially suitable as orientation sensors 27 are magnetoresistive orientation sensors 27 such as a gyroscope, especially a gyrometer, that measure the orientation of the carrier relative to the earth magnetic field. Other types of orientation sensors 27 can also be used. The sensor unit 26 comprises at least one orientation sensor 27. An even more precise determination is achieved with two (or even more) symmetrically arranged orientation sensors 27 located close to the left and right transport rollers 7, where the orientation sensors 27 are comprised in vibration sensors 27b such that the vibration and orientation sensor form a combined structural element 27v (FIG 3).

The position can be determined with a variety of known methods, e.g. a movement sensor 27 such as a speedometer 27 and/or a pulse encoder combined with simple run-time measurement from a known point. The position of the carrier 4s is back-calculated from its measured speed. Another possibility is to install one reflector 22s on the track 6 as reference device 22s and one photosensor 22m on the carrier 4s (or any other kind of suitable sender-receiver pair) wherein their signal is used as the logical zero pile mark. These and other position determination methods suitable for determining the position of the carrier 4s of a conveying system 2 can also be combined.

According to an embodiment, while the carrier 4s is moving the orientation sensor data combined with the position data enable the logic of the background system to recognize bends and straight sections. This combination of orientation and position measurements enable the background system to automatically create an image of the conveyer shape that can be displayed by a dashboard, optionally indicating the chosen sections (FIG 4).

Obtaining the position and orientation of the carrier 4s in this way has a much higher precision than a simple run-time measurement where the position of the carrier 4s is back-calculated from the speed of the carrier 4s. Uncertainty in the position determination translates into uncertainty in the anomaly detection because only data from a single section are analyzed - even slight changes of the borders of the section from one measurement to the next introduce deviations that are artifacts that do not indicate anomalies of the conveying system 2. The influence of artifacts due to imprecise position determination increases with increasing uncertainty in the determination of the sections which therefore should be extremely precise.

According to an embodiment, to determine logical sections, a pulse position indicator of the transport wheel 7 or another form of incremental encoder can be used. Each or each n-th pulse defines a section, combined with a zero pile set by a reference device 24.

Combining the orientation and position determination, an image 32p of the conveyer shape can be automatically built by the background system 20 (FIG 4). Sectioning the track 6 into sections enable the section wise and very precise data analysis that can be projected onto the created sorter shape.

For each section, an analysis method and/or if all or only some of the measured data are subjected to the analysis is determined individually. Sections with different properties can be analyzed with different analysis methods wherein all or only some of the measured data can be taken into account for a certain analysis method.

Some anomalies can be detected from a single data type, whereas other types of anomalies take into account more than one type of data stemming from different sensor types 22, 27. All measured data are useable for analysis.

The sections are chosen either such that a section covers a certain profile (straight, curved, inclined, ...). Or logical sections can for instance be chosen that can be determined by a pulse count such that all sections have the same length.

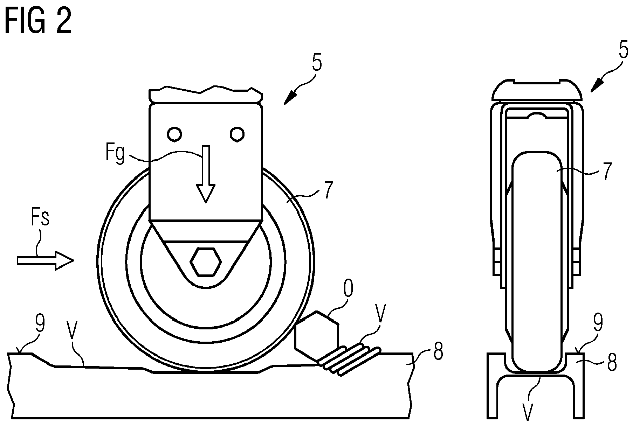

FIG 2 shows wear points V on a surface 9 of the conveyer rail 8, a typically occurring anomaly. Abrasive wear occurs when there is a solid object 0 with the same or an even greater hardness than the material of the transport rollers 7 or the surface 9. Adhesive wear occurs due to friction between materials of different hardness, the softer material is subjected to shearing and is transferred onto the harder material as a result.

Debris 0 from cardboard, rubber, carbon, cement, exhaust and other particles can be found on all kinds of surface in plants with conveyer technology. Debris particles O between the polymer wheels 7 and conveyer surface 9 act like an adhesion leading to abrasive wear W, visible by scratches on the surface, and material deterioration. Over time and under the influence of debris and atmospheric humidity polymer tend to harden. Wear, on the wheel and metal surface increase if the polymer hardens. Wear V results on the wheel 7 and on the rail surface 9.

Wear W from debris O is detected by track surface condition monitoring. Indication of track wear is a change in distance between running gear 5 and surface 9 (FIG 2). Furthermore, sections with increased track wear heat up higher than their surroundings, which can be detected with a temperature sensor 27. A small and not very pronounced distance deviation combined with a temperature change at the same location is a good indication for an anomaly stemming from wear.

This distance deviation is measured with laser sensors 271 installed close to the transport wheels 7 (FIG 3). An additional temperature sensor 27 can be used.

Frequently occurring anomalies, that can all be detected with this invention with the appropriate sensors 22, 27 are e.g. connection misalignments, wear due to debris, material deterioration, abrasive wear, power rail wear, deviations in the sorter chain tension, wrongly adjusted air gaps between linear motor and stator, mechanical failures.

Connection misalignments such as poorly leveled connections and joints are a common and mostly unnoticed problem for newly installed sorters 2 during the warranty period and a cause of excessive wear, especially wheel 7 wear. Misalignment can be detected with two sensors 22s, 27 installed with a small gap in between or by simple surface 9 - sensor 27 distance measurement of an infrared or laser distance sensor 271. A sudden, remaining change in distance d at the connection indicates a misalignment.

Power rail wear is common. The characteristic of such failure is that the power rails emits more heat at a point of heavy wear - electrical problems typically develop slowly with concurrent increasing temperatures, also increasing wear of the current collector 28. This can be observed with temperature sensors 27, 22 observing the power rail. Three infrared temperature 27 sensors measure the temperature of the metal power rail with the carrier 4s in motion and a fourth sensor 27 measures the environment temperature as a reference. Gaps at connections and corrosion show high electrical resistance which can be analyzed in order to detect anomalies before the power bus system condition cause unwanted operational downtime.

The chain tension can precisely predict many mechanical failures in a very early stage. Sorter chain 10 looseness and tightness are anomalies that cause increased wear, e.g. at linear motor stator sections where a precise stator position is essential. Sorter chains 10 adjusted too tight cause higher power consumption and unnecessary force, especially in curves. Sorter designs often use linear motors and stators. In a defined distance, the linear motors are placed on straight sections. Every carrier 4, 4s has a stator facing the linear motors. The linear motors convert electrical energy into motion with a magnetic field generating a force on the stator. As every carrier has a stator, the force is relatively constant when no electrical or mechanical failure occurs. Electrical failure comprises that the gap between motor and stator deviates. To measure the chain tension, one chain link is replaced by a battery powered force measuring load pin sensor 22m installed at the coupler 30 and moving with the chain (see EP20193378). This load pin sensor 22m is an additional, moving sensors 22m not located on the carrier 4s sending its measured data to the sensor unit 26.

Every conveying system 2 generates its own vibration fingerprint and the predominant spectrum characteristic of equipment that has loose components is a display of multiple harmonics of running speed. Curves, sections with inductions, diverter or straight sections have typical vibration pattern. The anomal ('failure') pattern deviates from the 'healthy' pattern. The vibration pattern of each section may need several rounds of calibration measurements. For every section, relevant filters can be applied to enable selecting the vibration generated from devices such as mechanical tilt mechanisms or upright stations. The vibration sensor 27 mainly picks up the vibration generated by the rolling wheels 7 on the track 8, those vibrations can be filtered out and/or analyzed separately by the background system 20. On straight sections without mechanical tilt or upright and after filtering the FFT show no amplitudes in case of a 'healthy' pattern. Sections with plausible and reproducible vibration patterns are used for a tendency analysis over a longer period. Not plausible and erratic pattern, as caused by noise, are filtered out. Vibration data are also used to find profile connection misalignment and heavy track damage - both generate vibration patterns that significantly deviate from normal.

FIG 4 shows a 3D-image of a sorter shape 32p in the form of a simplified dashboard. Projected onto the sorter shape 32p are the normalized chain tension, vibration and distance measurements 32', 32'', 32''' of the sensors 22m, 22s, 27. When there is no deviation from the normalization value, the plotted data lie on the visualized conveying system shape 32p. The larger the deviation, the larger the anomaly. This representation enables a quick and intuitive localization for servicing staff, much more intuitive than only indicating anomalies in the form of a data table.

In the case of FIG 4, two curves overlap in large parts because sensors 22m, 22s, 27 of equal type were placed on the right and left side of the carrier 4s. The anomalies, visible as peaks in the plot, only occurred on one of the rails 8, not both.

In FIG 4, only a manageable amount of anomalies is detected. In an embodiment of the invention, when several anomalies are detected, the detected anomalies are classified in a list in function of a determined anomaly characteristic, wherein said list establishes a ranking among all detected anomalies, said ranking representing an order of inspection according to which the detected anomalies have to be inspected, the classification of the detected anomalies in said list being configured for defining said order of inspection for the detected anomalies. For every detected anomaly, one, several or all of the characteristics of the list are displayed in the created conveyer system shape at its position of occurrence with a message and/or a graphical and/or numerical representation of the measurements, e.g. in the form of a dashboard. When the cursor is pointed on one of the data curves, more information is displayed. The operator can choose which of the data and in which way the data are displayed.

### List of reference signs

- 2: tilt tray sorter, conveying system
- 4: carrier
- 4s: carrier with sensor unit
- 5: running gear
- 6: conveyer track/loop
- 7: transport roller, wheel
- 8: conveyer rail
- 9: conveyer rail surface
- 10: chain
- 12: feeding conveyer
- 14: feeding station
- 16: chute
- 18: unloading station
- 20: background system
- 22s: additional stationary sensor, sensor on rail
- 22m: additional moving sensor, sensor on running element
- 24: gateway, reference device
- 25: fixation
- 26: sensor unit
- 27: sensor of sensor unit 26
- 271: laser sensor
- 27v: vibration sensor
- 28: current collector
- 29: tilt tray30 coupler
- 32: normalized measurements
- 32p: position
- com20-24: communication gateway - background system
- com4s-24: communication sensor unit - gateway
- V: wear
- O: foreign object

## Claims

1. A method for anomaly detection during operation of a conveying system (2), especially a sorter, which is formed of at least one carrier (4s) running on a conveyer track (6), especially a conveyer loop (6), wherein the carrier (4s) comprises a sensor unit (26) comprising one or more sensors (27) ;
**characterized by** the method steps:
a) each sensor (27, 22s, 22m) registers measurements useable for an anomaly detection of the conveying system (2) while the carrier (4s) runs on the conveyer track (6);
b) one or more of the sensors (27) continuously determines a position of the carrier (4s);
c) dividing the conveyer track (6) into sections;
d) the measured data are allocated to a specific section based on the determined position of the carrier (4s) and are then subjected to an analysis for each section separately before and/or after a transmission to a background system (20) ;
e) the data are transmitted wirelessly by the sensor unit (26) to the background system (20), together with a time stamp and an identity of each sensor (27, 22s, 22m);
f) deviations in the analyzed data transmitted in the method step e) are detected as an anomaly and signaled by a message by the background system (20) indicating the position with a minimum precision of the section of the anomaly.

2. The method as claimed in claim 1, **characterized in that** the position determination comprises the orientation of the carrier (4s) and based on the determined position of the carrier (4s), an image of the conveyer system shape is automatically created.

3. The method as claimed in claim 1 or 2, **characterized in that**
the conveying system (2) further comprises one or more additional sensors (22s, 22m) and/or reference devices (24) localized stationary and/or on moving parts of the conveying system (2), wherein each additional sensor (22s, 22m) registers further measurements and transmits the measured data wirelessly to the sensor unit (26), wherein a position of each additional sensor (22s, 22m) and/or reference device (24) is precisely known or determinable.

4. The method as claimed claim 3, **characterized in that** the position of the carrier (4s) is determined also using the reference device and/or one or more of the sensors (22s, 22m, 27) comprising one or more of the following:
- an orientation sensor (27) such as a gyroscope, especially a gyrometer;
- a movement and/or acceleration sensor (27) such as a speedometer (27);
- a pulse encoder;
- one or several of the reference devices (24) installed close to or on the conveyer track (6) at a reference point and a reference sensor (27) interacting with the reference device;
- a stationary sensor (22s) localized and adapted to determine speed and/or position of the carrier (4s).

5. The method as claimed in claim 4, **characterized in that** the sections are determined by one or more of the following method steps:
- one or several, especially even multiple, pulse counts (e.g. of the pulse encoder) determine start and end of a section;
- the conveyer track (6) is divided in sections with equal length;
- the conveyer track (6) is divided into sections with distinct profile and/or functionality;
- the reference device installed at the reference point determines start and/or end of a section.

6. The method as claimed in claim 1 to 5, **characterized in that**
for each section, an analysis method and/or if all or only some of the measured data are subjected to the analysis is determined individually.

7. The method as claimed in one of claims 1 to 6,
**characterized in that**
when several anomalies are detected, the detected anomalies are classified in a list of detected anomalies in function of a determined anomaly characteristic, wherein said list establishes a ranking among all detected anomalies, said ranking representing an order of inspection according to which the detected anomalies have to be inspected, the classification of the detected anomalies in said list being configured for defining said order of inspection for the detected anomalies and for every detected anomaly, one or several of the characteristics of the list are displayed in the created conveyer system shape by the background system (20) .

8. The method as claimed in one of claims 2 to 7,
**characterized in that**
the background system (20) displays the image of the conveyer shape, possibly indicating the sections, wherein the detected anomaly may be displayed at its position of occurrence with the message and/or a graphical and/or numerical representation of the measurements, wherein the detected anomalies and the conveyer system shape are displayed in the form of an adaptable dashboard wherein the displayed characteristics and how they are displayed can be chosen by an operator.

9. The method as claimed in one of claims 1 to 8,
**characterized in that**
the deviations are detected by a statistical comparison with preceding registrations of the same section or by a comparison with a fixed magnitude.

10. The method as claimed in one of claims 3 to 9,
**characterized in that**
the transmission of the data from the sensor unit (26) to the background system (20) takes place via a gateway (24), wherein the gateway (24) is installed at a fixed location on to the conveyer track (6) and, each time the carrier (4s) passes over it, a zero time is set such that the gateway (24) serves as a reference device (24) and in addition to the measurements, state data of at least one sensor (27, 22s, 22m) is transmitted.

11. The method as claimed in one of claims 1 to 10,
**characterized in that**
the analyzed data are combined to determine deviations to detect an anomaly and/or a characteristic of the detected anomaly and the sensors (22s, 22m, 27) are adapted to determine one or more of the following: oscillation, vibration, chain tension, temperature, carrier condition, track surface condition, power rail condition.

12. A conveying system (2), especially a sorter, which is formed of at least one carrier (4s) running on a conveyer track (6), especially a conveyer loop (6), wherein the carrier (4s) comprises a sensor unit (26) comprising one or more sensors (27), the conveying system (2) comprising means for performing the method as claimed in one of the claims 1 to 11.

13. A conveying system (2) as claimed in claim 12,
**characterized in that**
a) the conveying system (2) further comprises one or more additional sensors (22s, 22m) and/or reference devices (24) localized stationary and/or on moving parts of the conveying system (2), wherein each sensor (27, 22s, 22m) registers measurements useable for an anomaly detection of the conveying system (2) while the carrier (4s) runs on the conveyer track (6), wherein the sensors (27, 22s, 22m) register measurements to determine one or more of the following: oscillation, vibration, chain tension, carrier condition, track surface condition, power rail condition;
b) the position of the carrier (4s), comprising its orientation, is continuously determined;
c) the conveying system (2) is configured for dividing the conveyer track (6) into sections;
d) the measured data are allocated to a specific section based on the determined position of the carrier (4s) and are then subjected to an analysis for each section separately before and/or after a transmission to a background system (20) ;
e) the data are transmitted wirelessly by the sensor unit (26) to the background system (20), together with a time stamp and an identity of each sensor (27, 22s, 22m);
f) the background system (20) is configured to automatically create an image of the conveying system shape, based on the determined position of the carrier (4s), wherein the term position comprises orientation;
g) deviations in the analyzed data transmitted in the method step e) are detected as an anomaly and signaled by a message by the background system (20) indicating the position with a minimum precision of the section of the anomaly;
h) the background system (20) displays the detected anomaly at its position of occurrence in the created conveyer system shape with the message and/or a graphical and/or numerical representation of the measurements, wherein the background system (20) is preferably configured to display the detected anomalies and the conveyer system shape in the form of an adaptable dashboard wherein the displayed characteristics and how they are displayed can be chosen by an operator.

14. A conveying system (2) as claimed in claim 13,
**characterized in that**
the sensor unit comprises an orientation sensor such as a gyroscope, especially a gyrometer, to determine the orientation of the carrier (4s) and a movement sensor such as a speedometer and/or a pulse encoder, wherein the position of the carrier (4s) may also be determined using the one or more reference devices (24), wherein the section divide module determines the sections taking into account input stemming from the position determination of the carrier (4s).

15. A conveying system (2) as claimed in one of claims 12 to 14, **characterized in that**
for each section, an analysis method and/or if all or only some of the measured data are subjected to the analysis is determined individually.
